# EUROPEAN PATENT APPLICATION

(11) **EP 2 341 243 A2**
(43) Date of publication of application: **06.07.2011**
(21) Application number: 10195794.2
(22) Date of filing: 17.12.2010
(51) Int. Cl.: F03D 7/00, F03D 1/06

(54) **Wind turbine rotor blades including controllable depressions**

(30) Priority: 04.01.2010 US 651670
(71) Applicant: General Electric Company, Schenectady, NY 12345 (US)
(72) Inventor: Vyas, Parag, Niskayuna, NY 12309 (US)
(74) Representative: Bedford, Grant Richard

(57) **Abstract**

A wind turbine system 100 is disclosed. The wind turbine system 100 includes a plurality of rotor blades 102, 104, 106 operationally coupled to a control system 128. At least one of the plurality of rotor blades 102, 104, 106 includes an active surface 140, 142, 144 fabricated on the plurality of rotor blades 102, 104, 106, wherein the control system 128 is configured to generate control signals 136, 212 for formation of one or more depressions 130, 132, 134, 210, 302 at an optimal frequency and at a number of optimal locations on the active surface 140, 142, 144 based upon a plurality of wind flow parameters, and transmit the control signals 136, 212 to the plurality of rotor blades 102, 104, 106 for the formation of the one or more depressions 130, 132, 134, 210, 302 at the optimal frequency and at the number of optimal locations on the active surface.

## Description

The invention relates generally to wind turbines, and more specifically to wind turbine rotor blades including controllable depressions.

Wind turbines are environmentally friendly and cost-effective alternate sources of energy that convert wind energy to electrical energy. A wind turbine typically includes a wind rotor having multiple rotor blades. The rotor blades are primary elements of the wind turbines for the conversion of wind energy into electrical energy. A rotor blade generally includes a suction side and a pressure side. The suction side is a side of the rotor blade that is in a low pressure region in comparison to a pressure of a region of the pressure side.

Typically, wind turbine rotor blades experience two major aerodynamic forces, namely a lift force and a drag force. The lift force primarily acts to rotate the rotor blades, whereas the drag force primarily resists rotation of the rotor blades. In operation, wind flows along the pressure side and the suction side of a rotor blade resulting in a pressure difference between the pressure and suction sides. Consequently, a lift force is generated from the pressure side towards the suction side of the rotor blade. Thereby, the lift force rotates the rotor blade.

Furthermore, during rotation each of the rotor blades has a relative motion to the incoming wind flow to the wind turbine. The angle of attack is defined as the angle of relative motion between freestream wind velocity with respect to a rotor blade and the chord of the rotor blade. The chord is the linear distance between the leading edge and a trailing edge of the rotor blade.

Accordingly, rotor blades are aerodynamically designed to operate with maximum lift force and minimum drag force to enable maximum efficiency of the wind turbines. For example, a pitch angle and a rotational speed of a rotor blade are controlled to facilitate rotation of the rotor blade at an optimal angle of attack. However, due to the turbulent nature of wind, the angle of attack experienced by the rotor blades fluctuates rapidly. At a high angle of attack, separation of the flow over the rotor blades may result in generation of wake and pressure differences. The wake and pressure differences leads to increased drag force. Furthermore, the fluctuation in the angle of attack leads to recursive transitions from an attached flow to separation flow of the rotor blades, or vice versa. The recursive transitions thereby may result in increased noise and fatigue loads on the rotor blades.

Hence, it is highly desirable to develop a control system that controls rotor blades to minimize drag force and maximize lift force. Furthermore, it is desirable to develop a control system that controls surfaces of the rotor blades to increase efficiency of wind turbines.

In accordance with an aspect of the present technique, a wind turbine system is presented. The wind turbine system includes multiple rotor blades operationally coupled to a control system, at least one of the rotor blades includes an active surface fabricated on the rotor blades. Further, the control system is configured to generate control signals for formation of one or more depressions at an optimal frequency and at a number of optimal locations on the active surface based upon multiple wind flow parameters, and transmit the control signals to the rotor blades for the formation of the one or more depressions at the optimal frequency and at the number of optimal locations on the active surface.

In accordance with a further aspect of the present technique, a method for formation of one or more depressions on a rotor blade of a wind turbine is provided. The method includes generating control signals for the formation of the one or more depressions at an optimal frequency and at a number of optimal locations on an active surface based upon multiple wind flow parameters, and transmitting the control signals to multiple rotor blades for the formation of the one or more depressions at the optimal frequency and at the number of optimal locations on the active surface.

In accordance with still another embodiment of the present technique, a method of assembling a rotor blade is provided. The method includes forming multiple modules of the rotor blade, forming an active surface on one or modules of the rotor blade, or portions thereof, and successively coupling the modules to form the rotor blade.

In accordance with yet another embodiment of the present technique, a method of manufacturing a wind turbine system is provided. The method includes providing multiple rotor blades, providing an active surface on at least one of the rotor blades, providing a control system operationally coupled to the rotor blades, wherein the control system is configured to generate control signals for formation of one or more depressions at an optimal frequency and at a number of optimal locations on the active surface based upon multiple wind flow parameters, and transmit the control signals to the rotor blades for the formation of the one or more depressions at the optimal frequency and at the number of optimal locations on the active surface.

Various features, aspects, and advantages of the present invention will become better understood when the following detailed description is read with reference to the accompanying drawings in which like characters represent like parts throughout the drawings, wherein:
FIG. 1 is a diagrammatic illustration of a wind turbine system in accordance with embodiments of the invention;
FIG. 2 is a cross-sectional view of an exemplary rotor blade of FIG. 1 including depressions at exemplary optimal locations of the rotor blade in accordance with an embodiment of the invention;
FIG. 3 is a cross-sectional view of an exemplary rotor blade of FIG. 1 including depressions towards a trailing edge of the rotor blade in accordance with an embodiment of the invention;
FIG. 4 is a top view of a rotor blade of FIG. 1 including varied optimal shapes, optimal sizes, optimal depths and optimal breadths of depressions in accordance with an embodiment of the invention;
FIG. 5 is a flow chart representing steps in a method for generating depressions on a rotor blade;
FIG. 6 is a flow chart representing steps involved in an exemplary method for assembling the rotor blade of FIG. 1 in accordance with an embodiment of the invention; and
FIG. 7 is a flow chart representing steps in an exemplary method for manufacturing a wind turbine.

As discussed in detail below, embodiments of the present invention include multiple rotor blades. An active surface is fabricated on each of the rotor blades. As used herein, the term "active surface" may be used to refer to a surface fabricated on rotor blades that may be controlled to form depressions. The depressions, for example, may include cavities, dimples, bumps and the like. The active surfaces of the rotor blades may be controlled in real time to form the depressions at optimal locations of the rotor blades and at an optimal frequency. As used herein, the term "optimal locations" may be used to refer to locations on rotor blades that may be used to form depressions on the rotor blades resulting in an increased efficiency of the rotor blades. More particularly, the term "optimal locations" may be used to refer to locations on active surfaces fabricated on rotor blades that may be used to form depressions. Accordingly, the optimal locations may be locations on rotor blades that are optimal for the formation of depressions on active surfaces to minimize drag force. The formation of depressions at the optimal locations results in minimizing the drag force by delaying separation of wind flow over the rotor blades resulting in increased efficiency of the rotor blades. Also, as used herein, the term "optimal frequency" may be used to refer to a frequency of formation of depressions on active surfaces fabricated on rotor blades that increases efficiency of a wind turbine. More particularly, the term "optimal frequency" may be used to refer to a frequency of formation of depressions on active surfaces of rotor blades due to variation in wind flow parameters. As used herein, the term "wind flow parameters" may be used to refer to parameters that may be used to determine the effect of wind on efficiency of a wind turbine.

In operation, rotor blades of wind turbines are generally affected by two aerodynamical forces including drag force and lift force. While an increase in the lift force generally increases efficiency of the wind turbines, an increase in the drag force generally decreases efficiency of the wind turbines. The lift force and the drag force fluctuate depending upon conditions of wind flow acting upon the rotor blades. The conditions of wind flow may include, for example, wind speed, wind turbulence, angle of attack, and the like.

Furthermore, one of the significant reasons for an increase in drag force that leads to decreased efficiency of the wind turbines is separation of wind flow over the rotor blades. The separation of wind flow over the rotor blades may increase drag force. The increase in drag force increases resistance against the rotation of the rotor blades, thus adversely affecting the efficiency and output of the wind turbines. It is, therefore, desirable to develop wind turbines coupled to a control system, wherein the control system is configured to form depressions on rotor blades of the wind turbines in real time. The formation of depressions on the rotor blades can delay separation of wind flow over the rotor blades, thereby decreasing the drag force resulting in increased efficiency of the wind turbines. The formation of depressions may also increase drag force.

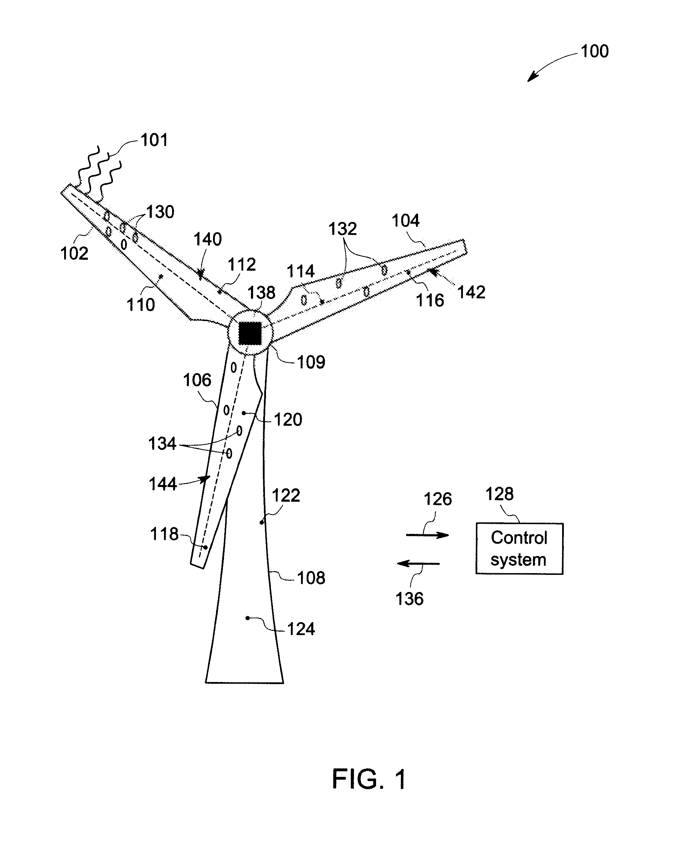

Referring now to FIG. 1, a diagrammatic illustration of an exemplary wind turbine system 100, in accordance with embodiments of the invention, is depicted. As used herein, the term "wind turbine" may be used to refer to a rotating machine that converts kinetic energy of wind to mechanical energy. The mechanical energy may then be converted to electrical energy.

In an exemplary embodiment, the wind turbine 100 includes rotor blades 102, 104, 106, a tower 108, a nacelle 109 and a hub (not shown in FIG. 1). As shown in FIG. 1, wind flow 101 acts upon the rotor blades 102, 104, 106. In a presently contemplated configuration, the rotor blade 102 includes sensing devices 110, 112. Furthermore, the rotor blade 104 includes sensing devices 114, 116, and the rotor blade 106 includes sensing devices 118, 120. In addition, in certain embodiments, the tower 108 includes sensing devices 122, 124, as shown in FIG. 1. The sensing devices 110, 112, 114, 116, 118, 120, 122, 124, for example, may include anenometers, voltage sensors, optical sensors, temperature sensors, proximity sensors, tacho rotor sensors, tacho generator sensors, rotational speed sensors, load sensors, pressure sensors, yaw sensors, twisted cable sensors, or combinations thereof. In one embodiment, the sensing devices 110, 112, 114, 116, 118, 120 may be placed along lengths of the rotor blade 102, 104, 106. In another embodiment, the sensing devices 110, 112, 114, 116, 118, 120 may be placed on predetermined sections of the rotor blades 102, 104, 106. It may be noted that, while in the presently contemplated configuration, each of the rotor blades 102, 104, 106 and the tower 108 of the wind turbine 100 are each shown as including two sensing devices, in certain embodiments, the number of sensors and positioning of sensors in the wind turbine 100 may vary. It may also be noted that while in the presently contemplated configuration, the nacelle 109 and the hub do not include any sensing devices, in certain embodiments, the nacelle 109 and the hub may also include one or more sensing devices.

Furthermore, in one embodiment, the sensing devices 110, 112, 114, 116, 118, 120, 122, 124 may generate sensor signals 126 representative of multiple wind flow parameters. The wind flow parameters, for example, may include wind speed, wind direction, rotations per minute, stress, temperature, generation winding, vibration in blades, vibrations in tower, power measurement, twist in power cable of a generator of a wind turbine, load conditions, a rotor blade angle, speed of the multiple rotor blades, a yaw angle, an angle of attack, turbulence, gusts, wake interactions, and the like.

Moreover, as illustrated in FIG. 1, the wind turbine 100 is operatively coupled with a control system 128. In one embodiment, the control system 128 may be configured to determine pitch angle set points of each of the rotor blades 102, 104, 106 that may increase or decrease loads on the wind turbine 100. As used herein, the term "pitch angle setpoint" may be used to refer to a potential pitch angle of a rotor blade that may increase or decrease load on a wind turbine based upon wind flow. In one embodiment, the pitch angles of the rotor blades 102, 104, 106 may include potential pitch angles of the rotor blades 102, 104, 106 that may result in a desired efficiency of the wind turbine 100. The control system 128, for example, may determine the pitch angles based upon rotational speed of the rotor blades 102, 104, 106 and an output power of the wind turbine 100. The control system 128, for example, may receive the rotational speed from rotational speed sensors on the rotor blades 102, 104, 106. While in the presently contemplated configuration, the single controller 128 determines the pitch angles for the rotor blades 102, 104, 106, in certain embodiments, there may be a separate controller for each of the rotor blades 102, 104, 106 that determines a pitch angle of a respective rotor blade.

Furthermore, the controller 128 may be configured to determine a torque setpoint for the wind turbine 100 based upon the wind flow 101. As used herein, the term "torque setpoint" may be used to refer to a potential torque that may result in a desired efficiency of a wind turbine based upon wind flow. Accordingly, the controller 128 compensates for varied conditions of the wind flow 101 by varying the pitch angle setpoints of the rotor blades 102, 104, 106 and the torque setpoint of the wind turbine 100.

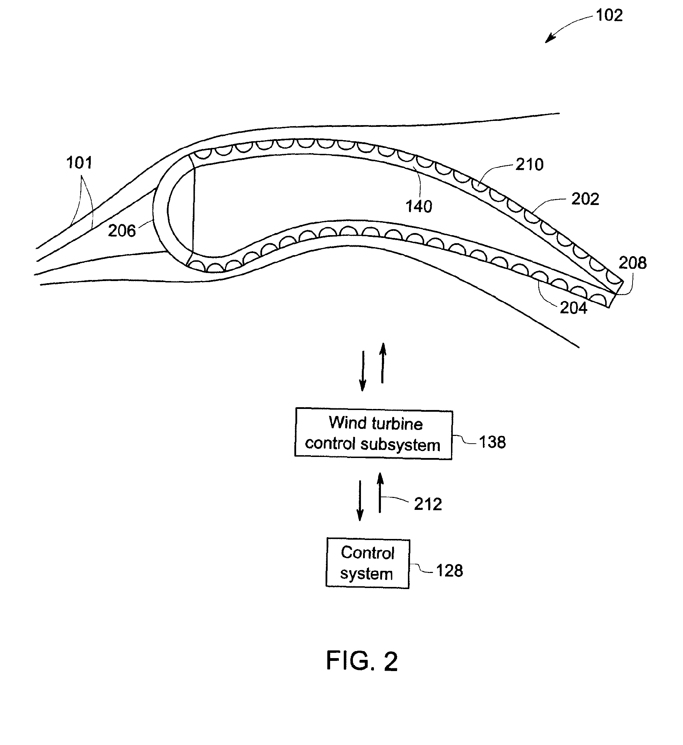

Moreover, in certain embodiments, the control system 128 may be configured to receive the sensor signals 126 from the sensing devices 110, 112, 114, 116, 118, 120, 122, 124. The sensor signals 126 may be representative of the wind flow parameters. The control system 128 is further configured to process the sensor signals 126 to determine optimal locations for formation of depressions 130, 132, 134 on the rotor blades 102, 104, 106. The control system 128 determines the optimal locations based upon the sensor signals 126. In one embodiment, the control system 128 may form the depressions 130, 132, 134 based upon the sensor signals 126 and the pitch angle set points and the torque set point of the rotor blades 102, 104, 106. In certain embodiments, the control system 128 determines the optimal locations based upon the wind flow parameters. The optimal locations for the formation of depressions 130, 132, 134 on the rotor blades 102, 104, 106 may vary based upon the wind flow parameters. Furthermore, the depressions 130, 132, 134, for example, may include cavities, dimples, bumps, and the like. The formation of the depressions 130, 132, 134 on the rotor blades 102, 104, 106 results in delaying or promoting the separation of the wind flow 101 over the rotor blades 102, 104, 106 during rotation. Furthermore, the optimal locations for the formation of depressions 130, 132, 134, for example, may include near roots of the rotor blades, ends of the rotor blades, near leading edges, near trailing edges, on leading edges, on trailing edges, the entire rotor blades, center surfaces of the rotor blades, and the like. In one embodiment, the control system 128 may also determine the optimal locations based upon geometry and radial position of the rotor blades 102, 104, 106. In addition, the control system 128 is configured to determine an optimal frequency of formation of the depressions 130, 132, 134 on the rotor blades 102, 104, 106. The control system 128 may be further configured to determine optimal shapes, optimal sizes, optimal depths, optimal breadths, and the like of the depressions 130, 132, 134. The control system 128 determines the optimal frequency for the formation of the depressions 130, 132, 134, and the optimal shapes, the optimal sizes, the optimal depths and the optimal breadths of the depressions 130, 132, 134 based upon the sensor signals 126. More particularly, the control system 128 determines the optimal frequency for the formation of the depressions 130, 132, 134, and the optimal shapes, the optimal sizes, the optimal depths and the optimal breadths of the depressions 130, 132, 134 based upon the wind flow parameters. Exemplary embodiments of the optimal locations, the optimal shapes, the optimal sizes, the optimal breadths and the optimal depths will be explained in greater detail with reference to FIGs. 2-4.

Moreover, the control system 128 is further configured to transmit control signals 136 representative of the determined optimal locations, the optimal frequency, the optimal shapes, the optimal sizes, the optimal breadths and the optimal depths of the depressions 130, 132, 134 to a wind turbine control subsystem 138. The wind turbine control subsystem 138 is configured to receive the control signals 136 transmitted by the control system 128. The wind turbine control subsystem 138 is further configured to facilitate formation of the depressions 130, 132, 134 on the rotor blades 102, 104, 106 based upon the control signals 136. More particularly, the wind turbine control subsystem 138 is configured to facilitate formation of the depressions 130, 132, 134 on active surfaces 140, 142, 144 fabricated on the rotor blades 102, 104, 106, respectively. The active surfaces 140, 142, 144 include surfaces that may be controlled to form depressions.

While in the presently contemplated configuration, the front sides of the rotor blades 102, 104, 106 are shown as including the active surfaces 140, 142, 144, in accordance with exemplary aspects of the present technique, active surfaces may be fabricated at the back sides of the rotor blades 102, 104, 106. In another exemplary embodiment, active surfaces may be fabricated on the front sides and the back sides of the rotor blades 102, 104, 106. The active surfaces 140, 142, 144, for example, may be of elastomeric material. More particularly, the active surfaces 140, 142, 144 may be of dielectric elastomeric material. In one embodiment, the dielectric elastomeric material may include electroactive polymer. In one embodiment, the active surfaces 140, 142, 144 may be configured to determine pressure fluctuations on the rotor blades 102, 104, 106. The active surfaces 140, 142, 144 may be fabricated on the rotor blades 102, 104, 106 using inkjet printing, and the like. In one embodiment, the active surfaces 140, 142, 144 may include electro-active ceramic actuators, such as, piezoelectric actuators, electrostrictive actuators, and the like. In another embodiment, the active surfaces 140, 142, 144 may include shape memory alloys, micro electromechanical devices, shape memory alloys, micro tabs, and the like. It should be noted that while in the presently contemplated configuration, the rotor blades 102, 104, 106 are shown as including the sensing devices 110, 112, 114, 116, 118, 120, in certain embodiments, the active surfaces 140, 142, 144 fabricated on the rotor blades 102, 104, 106 may include the sensing devices 110, 112, 114, 116, 118, 120.

Furthermore, as previously noted, the wind turbine control subsystem 138 is configured to facilitate formation of the depressions 130, 132, 134 on the rotor blades 102, 104, 106 based upon the control signals 136. In operation, the control subsystem 138 generates activation signals based upon the control signals 136. The activation signals activate at least a portion of the active surfaces 140, 142, 144. More particularly, the activation of at least a portion of the active surfaces 140, 142, 144 results in electrical stimulation of the active surfaces 140, 142, 144. The electrical stimulation of the active surfaces 140, 142, 144 results in application of voltages on the active surfaces 140, 142, 144. The application of voltages results in formation of the depressions 130, 132, 134. The formation of the depressions 130, 132, 134 may either delay or promote separation of wind flow with respect to an angle of attack, and therefore, also decrease or increase lift force. In one embodiment, formation of the depressions 130, 132, 134 may increase mechanical load on the rotor blades 102, 104, 106. In an alternative embodiment, formation of the depressions 130, 132, 134 may result in a decrease in mechanical load on the rotor blades 102, 104, 106. Also, formation of the depressions 130, 132, 134 may reduce mechanical loads on other mechanical components coupled to the rotor blades 102, 104, 106 of the wind turbine 100. In certain embodiments, formation of the depressions 130, 132, 134 may also result in reduction of noise by the rotor blades 102, 104, 106. More particularly, the formation of the depressions 130, 132, 134 may result in reducing noise created by tip of each of the rotor blades 102, 104, 106.

FIG. 2 is a cross-sectional view of the rotor blade 102 of FIG. 1 including depressions 210 at exemplary optimal locations of the rotor blade 102. As shown in FIG. 2, the rotor blade 102 includes the active surface 140 *(see* *FIG. 1**),* a suction side 202, a pressure side 204, a leading edge 206 and a trailing edge 208. Further, the wind flow 101 acts on the rotor blade 102. Furthermore, the rotor blade 102 and the control system 128 (*see* *FIG. 1*) are operationally coupled to the wind turbine control subsystem 138 (*see* *FIG. 1*)*.*

In the presently contemplated configuration, the wind turbine control subsystem 138 receives control signals 212 from the control system 128. The control signals 212 are representative of the optimal locations, optimal frequency, optimal size, optimal breadth and optimal depth for formation of the depressions 210. In the presently contemplated configuration, the optimal locations include entire active surface 140 on the rotor blade 102 or portions thereof, and the optimal shape includes dimples. Accordingly, as shown in FIG. 1, the depressions 210 formed on the active surface 140 are in the optimal shape of dimples. Furthermore, the wind turbine control subsystem 138 is configured to facilitate formation of the depressions 210 on the active surface 140. The wind turbine control subsystem 138 facilitates formation of the depressions 210 by electrically stimulating the active surface 140. The electrical stimulation of the active surface 140 leads to application of voltages of determined levels at the optimal locations for formation of the depressions 210. Accordingly, in the presently contemplated configuration, the voltages are applied over the entire active surface 140 for formation of the depressions 210. In one embodiment, the active surface 140 may include an electric circuit (not shown) for application of the voltages at the optimal locations on the active surface 140. In another embodiment, the active surface 140 may include cathodes (not shown) for application of the voltages at the optimal locations on the active surface 140. Further, in one embodiment, voltage applied on the active surface results in increase or decrease of depth of the depressions 210. Alternatively, the voltage can be varied to increased or decrease the depth of the depression.

Moreover, in one embodiment, formation of the depressions 210 results in delaying onset of flow separation with respect to an angle of attack. In other words, formation of the depressions 210 results in achieving the angle of attack before separation of the rotor blade 102 from the wind flow 101. Consequently, formation of the depressions 210 may increase lift force and power capture by the wind turbine 100. As used herein, the term "angle of attack" may be used to refer to an angle between freestream relative wind velocity with respect to a rotor blade and a chord of the rotor blade. Also, as used herein, the term "chord" may be used to refer to a linear distance of a leading edge of a rotor blade from a trailing edge of the rotor blade. In an alternative embodiment, formation of the depressions 210 may minimize dynamic load, such as, fatigue load or extreme load. In still another embodiment, formation of the depressions 210 may minimize dynamic fluctuations of loads. In yet another embodiment, formation of the depressions 210 may facilitate the wind turbine 100 to react to extreme gust events.

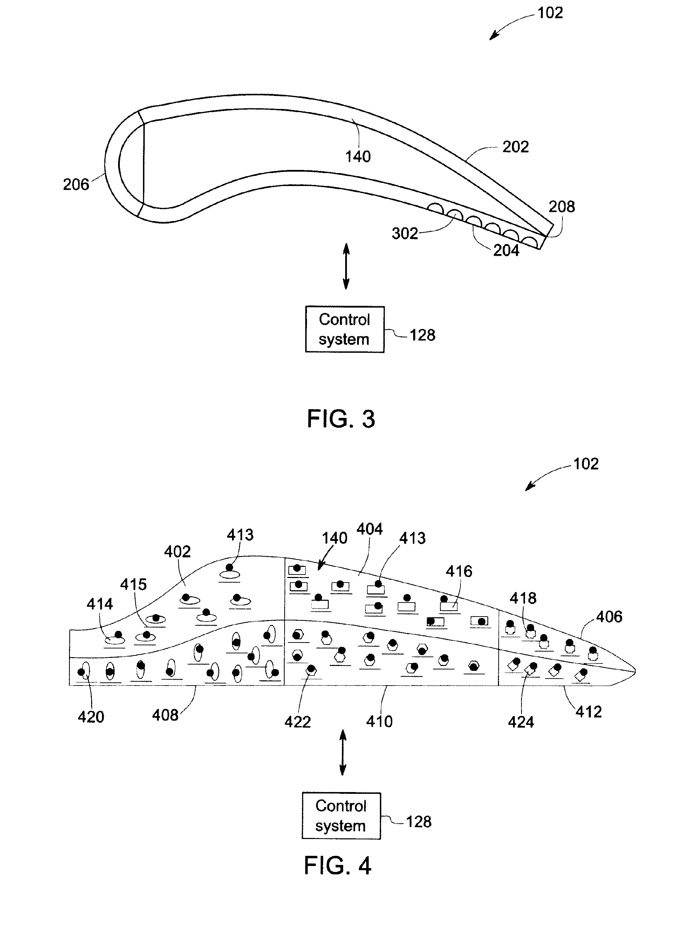

FIG. 3 is a cross-sectional view of the rotor blade 102 of FIG. 1 including exemplary depressions 302 on the pressure side 204 and towards the trailing edge 208 of the rotor blade 102. As shown in FIG. 3, the rotor blade 102 includes the suction side 202, the pressure side 204, the leading edge 206 and the trailing edge 208. (See FIG. 2). As illustrated herein, the depressions 302 are optimally located on the pressure side 204 and towards the trailing edge 208 of the rotor blade 102. The depressions 302 are formed on the rotor blade 102 based upon control signals received from the control system 128. The control system 128 determines the optimal locations based upon wind flow parameters. In the presently contemplated configuration, the formation of the depressions 302 on the active surface 140 results in increase in wind pressure on the pressure side 204 and towards the trailing edge 208. The increase in pressure on the pressure side 204 increases lift force to improve efficiency of the rotor blade 102 and decrease fatigue loads on the rotor blade 102. While in the presently contemplated configuration, the depressions 302 of similar optimal shapes, optimal sizes, optimal depths and optimal breadths are formed on the rotor blade 102, in certain embodiments, depressions of varied optimal shapes, optimal sizes, optimal breadths and optimal depths may be formed on the rotor blade 102. Variation in optimal shapes, optimal sizes, optimal breadths and optimal depths of depressions on the rotor blade 102 will be illustrated in FIG. 4.

Turning now to FIG. 4, a top view of a rotor blade 102 of FIG. 1 including multiple optimal locations 402, 404, 406, 408, 410, 412, varied optimal shapes, optimal sizes, optimal depths and optimal breadths, in accordance with exemplary aspects of the present technique, is depicted. As shown in FIG. 4, the rotor blade 102 is operationally coupled to the control system 128. Also, as shown in the presently contemplated configuration, the rotor blade 102 is divided in to multiple zones 402, 404, 406, 408, 410, 412. Further, each of the zones 402, 404, 406, 408, 410, 412 includes respective actuators 415 on the active surface 140. As previously noted with reference to FIG. 1, the actuators 415, for example may include electro-active ceramic actuators, shape memory alloys, micro electromechanical devices, shape memory alloys, micro tabs, and the like.

Moreover, each of the zones 402, 404, 406, 408, 410, 412 includes sensors 413. The controller 128 receives sensor signals from sensors 413. The sensor signals, for example, may be representative of one or more wind flow parameters, such as, wind pressure differences, load differences, and the like. The controller 128 selects points on the zones 402, 404, 406, 408, 410, 412 for formation of multiple depressions 414, 416, 418, 420, 422, 424. The points for formation of the depressions 414, 416, 418, 420, 422, 424, for example, includes optimal locations on the zones 402, 404, 406, 408, 410, 412 that are nearest to the respective actuators 415.

Furthermore, each of the zones 402, 404, 406, 408, 410, 412 includes multiple depressions 414, 416, 418, 420, 422, 424, respectively, that are different in optimal shape, optimal size, optimal depth, or optimal breadth from depressions at the remaining optimal locations. As shown in FIG. 4, the depressions 414 are of oval shape, the depressions 416 are of rectangular shape, the depressions 418 are of addition shape, the depression 420 are of vertical oval shape, the depressions 422 are of hexagon shape, and the depressions 424 are of rhombus shape. Further, optimal size, optimal breadth and optimal depth of each of the depressions 414, 416, 418, 420, 422, 424 at the optimal locations 402, 404, 406, 408, 410, 412 are different from one another. The optimal depressions 414, 416, 418, 420, 422, 424 are formed at the optimal locations based upon control signals received from the control system 128. In one embodiment, the depressions 414, 416, 418, 420, 422, 424 are formed based upon control signals received from the control system 128. In one embodiment, the depressions 414, 416, 418, 420, 422, 424 are formed at the optimal locations 402, 404, 406, 408, 410, 412 based upon wind pressure differences and fluctuations, load differences, or both acting on each of the optimal locations 402, 404, 406, 408, 410, 412.

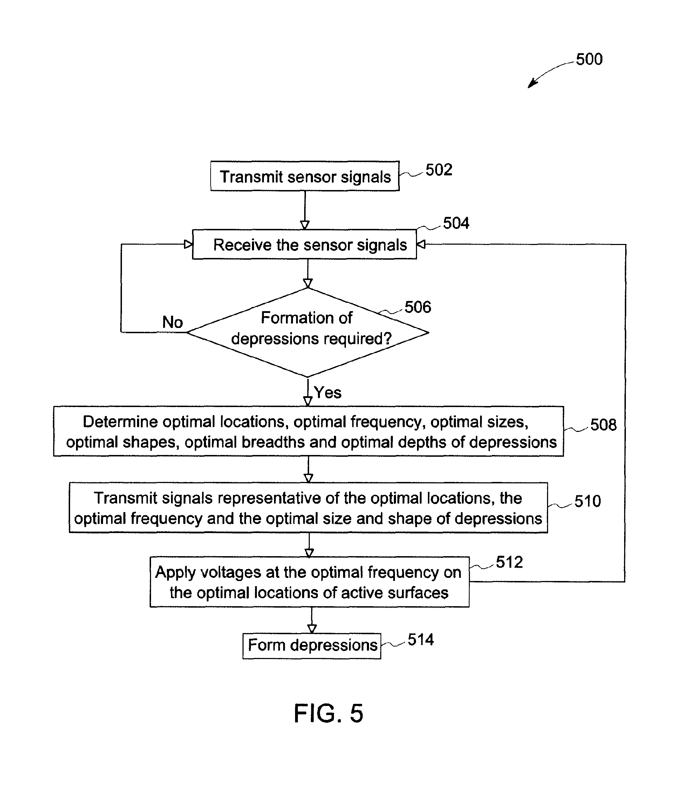

FIG. 5 is a flow chart 500 representing steps in a method for generating depressions on a rotor blade. The method starts at step 502, wherein sensor signals are transmitted. The sensor signals may be generated and transmitted by the sensing devices 110, 112, 114, 116, 118, 120, 122, 124 (*see* *FIG. 1*)*.* Further, as previously noted with reference to FIG. 1, the sensor signals, for example, may be representative of wind flow parameters. Some non-limiting examples of the wind flow parameters include wind speed, wind direction, rotations per minute, stress, temperature, generation winding, vibration in blades, vibration in tower, power measurement, twist in power cable of a generator of a wind turbine, load conditions, rotor blade angle, speed of the multiple rotor blades, yaw angle, angle of attack, turbulence, gusts, wake interactions, or combinations thereof.

Subsequently at step 504, the sensor signals are received by a control system. The sensor signals, for example, may be received by control system 128 (see FIG. 1). Furthermore, at step 506, a check may be carried out to determine if formation of depressions is required. The check, for example, may be carried out based upon the wind flow parameters. In one embodiment a control system, such as, the control system 128 may process the sensor signals to determine the requirement of formation of the depressions. For example, if the wind is not turbulent beyond a determined threshold, formation of depressions may not be required. Also, in another embodiment, if load fluctuations are high beyond a determined threshold then formation of the depressions may not be required. In still another embodiment, formation of the depressions may not be required to react to gust events acting on rotor blades. In another example, if the wind flow parameters include rapid fluctuation in angles of attack, high wind speed and high wind turbulence, then depressions may be required. Accordingly, if it is determined that the there is no requirement for the formation of depressions, then the control may be transferred to step 504. Thus, if there is no requirement for the formation of depressions, new sensor signals representative of new wind flow parameters may be received at the step 504.

However, if it is determined that the formation of depressions is required, then the control is transferred to step 508. As depicted by step 508, optimal locations and optimal frequency of formation of the depressions are determined. Furthermore, at step 508 optimal sizes, optimal shapes, optimal breadths and optimal depths of the depressions are determined. The optimal locations, the optimal frequency of formation of the depressions, the optimal sizes, the optimal shapes, the optimal breadths and the optimal depths, for example, may be determined by the control system 128.

Furthermore, at step 510, control signals representative of the optimal locations, the optimal frequency of formation of the depressions, the optimal shapes, the optimal sizes, the optimal breadths and the optimal depths may be transmitted to a wind turbine control subsystem, such as, the wind turbine control subsystem 138 (FIG. 1). The wind turbine control subsystem may be configured to electrically stimulate active surfaces fabricated on rotor blades. The wind turbine control subsystem 138, for example, may be configured to electrically stimulate the active surfaces 140, 142, 144.

As depicted by step 512, the electrical stimulation of the active surfaces results in application of voltages at the optimal locations on the active surfaces. In one embodiment, the voltages may be applied by electrodes in the active surfaces. The voltages, for example, may be applied on the active surfaces 140, 142, 144 (*see* *FIG. 1*).

Subsequently, at step 514, the application of voltages at the optimal locations results in formation of the depressions on the active surfaces. The depressions, for example, may be the depressions 130, 132, 134 (*see* *FIG. 1*) formed on the active surfaces 140, 142, 144, respectively. Further, the voltages may be applied at the optimal frequency to facilitate formation of the depressions at the optimal frequency.

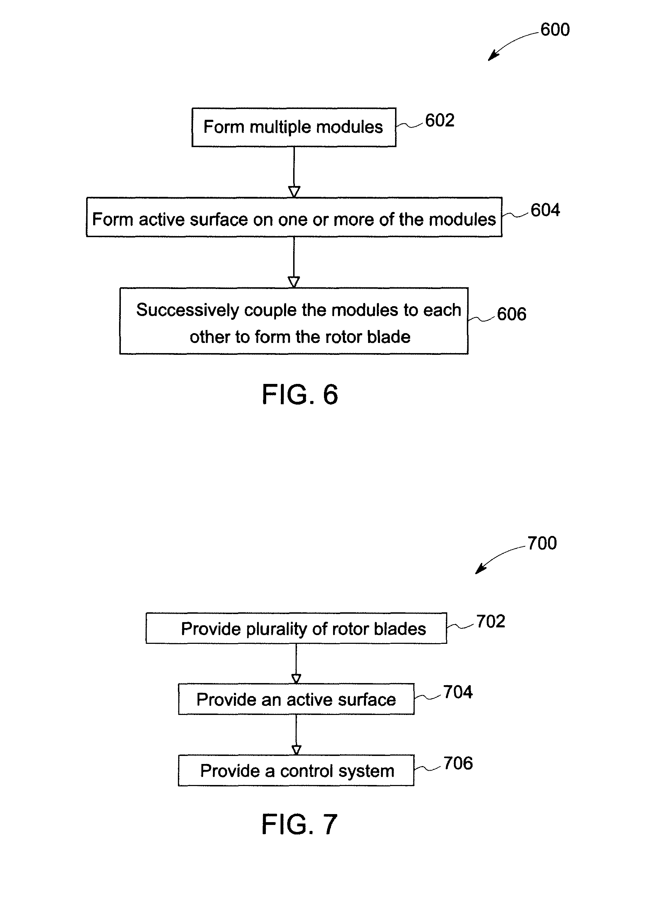

FIG. 6 is a flow chart 600 representing steps involved in an exemplary method for assembling the rotor blade of FIG. 1 in accordance with an embodiment of the invention. The method includes forming multiple modules of the rotor blade 102 in step 602. Further, at step 604, an active surface is formed on one or more of the modules. In one embodiment, formation of the active surface includes fabrication of the active surface on one or more of the modules. More particularly, formation of the active surface includes fabrication of an electric circuit on one or more of the modules. The active surface, for example, may be fabricated on one or more of the modules using an inkjet printing method, and the like. The active surface may be one of the active surfaces 140, 142, 144 *(see* *FIG. 1**).* The multiple modules are successively coupled to each other to form the rotor blade in step 606 wherein each module includes a centrally disposed longitudinal spar having a substantially circumferential cross section, at least one rib assembly affixed to the said longitudinal spar and a skin attached to the said at least one rib assembly. In an exemplary embodiment, the multiple modules are successively coupled via heating the module at a respective first end. In another embodiment of the invention, multiple modules are successively coupled via successively inserting adjacent modules at the respective first ends of a previous module. In yet another embodiment of the invention, an adhesive is applied at the respective first ends of the first module to adhere the module to form the wind turbine blade.

FIG. 7 is a flow chart 700 representing steps in an exemplary method for manufacturing a wind turbine. The method includes providing multiple rotor blades at step 702. In one embodiment, a nacelle is provided. In another embodiment, a hub is provided. In still another embodiment, a tower is provided. The rotor blades, for example, may be the rotor blades 102, 104, 106 (see FIG. 1). In one embodiment, the control system may be the control system 128 (see FIG. 1). As shown in FIG. 7, an active surface is provided on one or more of the rotor blades at step 704. In one embodiment, the active surface may be provided on one or more of the rotor blades by fabricating an electric circuit on the rotor blades. In one embodiment, the electric circuit may be fabricated using inkjet printing method, and the like. Furthermore, a control system is provided at step 706. In one embodiment, the control system is configured to generate control signals for formation of one or more depressions at an optimal frequency and at a number of optimal locations on the active surface based upon multiple wind flow parameters. Further, the control system is configured to transmit the control signals to the rotor blades for the formation of the one or more depressions at the optimal frequency and at the number of optimal locations on the active surface.

The various embodiments of the invention increase efficiency of wind turbines during varied conditions of wind. The invention increases efficiency of wind turbines by forming depressions on rotor blades. Further, the invention provides formation of the depressions in real time. The real time formation of the depressions may increase or decrease the lift force and the drag force. Furthermore, the various embodiments of the invention reduce fatigue loads on wind turbines. The reduction in fatigue loads results in reduction in wear and tear of wind turbines. Also, embodiments of the invention reduce noise of rotor blades during rotation.

It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the invention has been described in detail in connection with only a limited number of embodiments, it should be readily understood that the invention is not limited to such disclosed embodiments. For example, the invention may also be used for water turbines. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A wind turbine system, comprising:
   a plurality of rotor blades operationally coupled to a control system, at least one of the plurality of rotor blades, comprising:
      an active surface fabricated on the plurality of rotor blades, wherein the control system is configured to:
         generate control signals for formation of one or more depressions at an optimal frequency and at a number of optimal locations on the active surface based upon a plurality of wind flow parameters; and
         transmit the control signals to the plurality of rotor blades for the formation of the one or more depressions at the optimal frequency and at the number of optimal locations on the active surface.
2. The wind turbine system of clause 1, wherein the active surface comprises an electrical circuit configured to apply voltages at the optimal locations on the active surface.
3. The wind turbine system of any preceding clause, wherein the active surface comprises an electrical circuit configured to apply voltages at an optimal frequency on the active surface.
4. The wind turbine system of any preceding clause, wherein the application of voltages at the optimal locations on the active surface results in the formation of the one or more depressions.
5. The wind turbine system of any preceding clause, wherein the one or more depressions may be of different optimal shapes, optimal sizes, optimal depths, and optimal breadths, or combinations thereof.
6. The wind turbine system of any preceding clause, wherein the plurality of wind flow parameters comprise wind speed, wind direction, rotations per minute, stress, temperature, generation winding, vibration in blades, rotational speed, vibration in tower, power measurement, twist in power cable of a generator, load conditions, rotor blade angle, speed of the plurality of rotor blades, yaw angle, angle of attack, turbulence, gusts, wake interactions, or combinations thereof.
7. The wind turbine system of any preceding clause, wherein the plurality of rotor blades comprise a plurality of sensing devices configured to generate the plurality of wind flow parameters.
8. The wind turbine system of any preceding clause, wherein the active surface is fabricated on the plurality of the rotor blades utilizing ink-jet printing method, and the like.
9. The wind turbine system of any preceding clause, wherein the formation of the one or more depressions on the active surface facilitates delay in separation of flow over the plurality of rotor blades.
10. A method for formation of one or more depressions on a rotor blade of a wind turbine, comprising:
   generating control signals for the formation of the one or more depressions at an optimal frequency and at a number of optimal locations on an active surface based upon a plurality of wind flow parameters; and
   transmitting the control signals to a plurality of rotor blades for the formation of the one or more depressions at the optimal frequency and at the number of optimal locations on the active surface.
11. The method of any preceding clause, wherein generating the control signals comprises:
   receiving sensor signals representative of the plurality of wind flow parameters;
   determining a requirement for the formation of the one or more depressions based upon the wind flow parameters; and
   determining the optimal frequency for the formation of the one or more depressions and the optimal locations for the formation of the one or more depressions on the active surface.
12. The method of any preceding clause, further comprising applying voltages at the optimal locations and at the appropriate frequency on the active surface for the formation of the one or more depressions.
13. A method of assembling a rotor blade, comprising:
   forming multiple modules of the rotor blade;
   forming an active surface on one or modules of the rotor blade, or portions thereof; and
   successively coupling the modules to form the rotor blade.
14. The method of any preceding clause, wherein forming the active surface comprises fabricating an electric circuit on the rotor blade.
15. A method of manufacturing a wind turbine system, comprising:
   providing a plurality of rotor blades;
   providing an active surface on at least one of the plurality of rotor blades;
   providing a control system operationally coupled to the plurality of rotor blades, wherein the control system is configured to:
      generate control signals for formation of one or more depressions at an optimal frequency and at a number of optimal locations on the active surface based upon a plurality of wind flow parameters; and
      transmit the control signals to the plurality of rotor blades for the formation of the one or more depressions at the optimal frequency and at the number of optimal locations on the active surface.
16. The method of any preceding clause, wherein providing the active surface comprises fabricating an electrical circuit on the plurality of rotor blades.

## Claims

1. A wind turbine system (100), comprising:
a plurality of rotor blades (102, 104, 106) operationally coupled to a control system (128), at least one of the plurality of rotor blades (102, 104, 106), comprising:
an active surface (140, 142, 144) fabricated on the plurality of rotor blades (102, 104, 106), wherein the control system (128) is configured to:
generate control signals (136, 212) for formation of one or more depressions (130, 132, 134, 210, 302) at an optimal frequency and at a number of optimal locations on the active surface (140, 142, 144) based upon a plurality of wind flow parameters; and
transmit the control signals (136, 212) to the plurality of rotor blades (102, 104, 106) for the formation of the one or more depressions (130, 132, 134, 210, 302) at the optimal frequency and at the number of optimal locations on the active surface.

2. The wind turbine system (100) of claim 1, wherein the active surface (140, 142, 144) comprises an electrical circuit configured to apply voltages at the optimal locations on the active surface.

3. The wind turbine system (100) of any preceding claim, wherein the active surface (140, 142, 144) comprises an electrical circuit configured to apply voltages at an optimal frequency on the active surface.

4. The wind turbine system (100) of any preceding claim, wherein the application of voltages at the optimal locations on the active surface (140, 142, 144) results in the formation of the one or more depressions (130, 132, 134, 210, 302).

5. The wind turbine system (100) of any preceding claim, wherein the one or more depressions (130, 132, 134, 210, 302) are of different optimal shapes, optimal sizes, optimal depths, and optimal breadths, or combinations thereof.

6. The wind turbine system (100) of any preceding claim, wherein the plurality of wind flow parameters comprise wind speed, wind direction, rotations per minute, stress, temperature, generation winding, vibration in blades, rotational speed, vibration in tower, power measurement, twist in power cable of a generator, load conditions, rotor blade angle, speed of the plurality of rotor blades (102, 104, 106), yaw angle, angle of attack, turbulence, gusts, wake interactions, or combinations thereof.

7. The wind turbine system (100) of any preceding claim, wherein the plurality of rotor blades (102, 104, 106) comprise a plurality of sensing devices (110, 112, 114, 116, 118, 120, 122, 124) configured to generate the plurality of wind flow parameters.

8. The wind turbine system (100) of any preceding claim, wherein the active surface (140, 142, 144) is fabricated on the plurality of the rotor blades (102, 104, 106) utilizing ink-jet printing method, and the like.

9. The wind turbine system (100) of any preceding claim, wherein the formation of the one or more depressions (130, 132, 134, 210, 302) on the active surface (140, 142, 144) facilitates delay in separation of flow over the plurality of rotor blades (102, 104, 106).

10. A method (500) for formation of one or more depressions (130, 132, 134, 210, 302) on a rotor blade (102, 104, 106) of a wind turbine, comprising:
generating control signals (136, 212) for the formation of the one or more depressions (130, 132, 134, 210, 302) at an optimal frequency and at a number of optimal locations on an active surface (140, 142, 144) based upon a plurality of wind flow parameters; and
transmitting (510) the control signals (136, 212) to a plurality of rotor blades (102, 104, 106) for the formation of the one or more depressions (130, 132, 134, 210, 302) at the optimal frequency and at the number of optimal locations on the active surface (140, 142, 144).
